# EUROPÄISCHE PATENTSCHRIFT

(11) **EP 3 257 121 B1**
(45) Veröffentlichungstag und Bekanntmachung des Hinweises auf die Patenterteilung: **06.03.2019**
(21) Anmeldenummer: 16700611.3
(22) Anmeldetag: 14.01.2016
(51) Int. Cl.: H02B 1/052, H02B 1/04, H01R 9/26

(54) **ANORDNUNG MEHRERER RASTFÜSSE FÜR EINE BAUGRUPPE**
ARRANGEMENT OF MULTIPLE LATCHING FEET FOR AN ASSEMBLY
ENSEMBLE DE PLUSIEURS PIEDS ENCLIQUETABLES POUR MODULE

(30) Priorität: 12.02.2015 DE 202015100696 U
(43) Veröffentlichungstag der Anmeldung: 20.12.2017
(73) Patentinhaber: Weidmüller Interface GmbH & Co. KG, 32758 Detmold (DE)
(72) Erfinder: BÖCKER, Marc, 32839 Steinheim (DE); LANGE, Stephan, 32657 Lemgo (DE); BUSCH, Gerald, 32791 Lage (DE)
(74) Vertreter: Specht, Peter
(86) Internationale Anmeldenummer: PCT/EP2016/050664
(87) Internationale Veröffentlichungsnummer: WO 2016/128169

(56) Entgegenhaltungen:
- EP-A2- 0 327 708
- WO-A2-2008/071424
- DE-U1-202010 008 042

## Beschreibung

Die vorliegende Erfindung betrifft eine Anordnung mehrerer Rastfüße für eine Baugruppe, insbesondere eine elektrische Baugruppe, zum Aufrasten auf einer Tragschiene gemäß dem Oberbegriff des Anspruchs 1 sowie eine Baugruppe gemäß dem Oberbegriff des Anspruchs 14.

Solche Rastfüße werden bei elektrischen Baugruppen eingesetzt, beispielsweise bei elektrischen Leitern und/oder Bussystemen und/oder Modulen komplexer elektronischer Geräte, in denen die elektrischen Baugruppen auf einer Tragschiene nebeneinander verrastet sind.

Diese elektrischen Baugruppen sind zumeist modular in komplexen elektrischen Systemen einsetzbar, wobei auch nach erfolgter erster Installation oftmals einzelne Baugruppen durch andere Baugruppen ausgetauscht werden müssen. Dazu ist es notwendig, diese Baugruppen mit verhältnismäßig geringem Aufwand von der Tragschiene lösen zu können.

Wie beispielsweise aus der DE 20 2009 005 808 U1 oder der DE 20 2010 008 042 U1 bekannt ist, sind Rastfüße zur Befestigung an einer Tragschiene einzusetzen, wobei die Rastfüße zwei Klemmteile aufweisen, zwischen denen die Tragschiene verrastbar ist und an zumindest einem der Klemmteile eines auf die Tragschiene aufgerasteten Rastfußes ein hintergreifender Rastfinger angeformt ist, mit dem der Rastfuß an der Tragschiene verrastbar ist. Diese Verrastung hat sich an sich bewährt. Allerdings ist der Aufwand beim Entrasten mehrerer nebeneinander angeordneter Rastfüße relativ groß.

Aufgabe der vorliegenden Erfindung ist es, eine Anordnung mehrerer Rastfüße für eine Baugruppe bereitzustellen, die in einfacher Weise montierbar und in ebenso einfacher Weise schnell demontierbar ist.

Diese Aufgabe wird durch eine Rastfußgruppe für eine Baugruppe mit mehreren nebeneinander angeordneten, von der Tragschiene aufrastbaren Rastfüßen mit den Merkmalen des Anspruchs 1 sowie durch eine Baugruppe mit den Merkmalen des Anspruchs 14 gelöst.

Die erfindungsgemäße Rastfußgruppe weist einen ersten Rastfuß sowie wenigstens einen zweiten Rastfuß auf, wobei jeder der Rastfüße ein federnd ausgebildetes erstes Klemmteil und ein zweites Klemmteil aufweist, zwischen denen die Tragschiene verrastbar ist. An dem ersten Klemmteil jedes der Rastfüße ist ein die Tragschiene bei auf die Tragschiene aufgerasteten Rastfüßen hintergreifender Rastfinger angeformt. Die ersten Klemmteile der Rastfüße sind formschlüssig miteinander verbindbar.

Dabei weist ausschließlich das erste Klemmteil des ersten Rastfußes eine Werkzeugaufnahme zum Ansetzen eines Entrastungswerkzeuges auf, wobei der Rastfinger des ersten Klemmteils des ersten Rastfußes eine sich in Richtung des zweiten Klemmteils weiter erstreckende Auflagefläche zur Auflage der Tragschiene im verrasteten Zustand aufweist als eine Auflagefläche zur Auflage der Tragschiene im verrasteten Zustand des Rastfingers des ersten Klemmteils des wenigstens einen zweiten Rastfußes.

Mit einer solchermaßen ausgebildeten Rastfußgruppe ist eine einfache und zuverlässige Verrastung der Rastfüße der Rastfußgruppe sowie eine einfache und schnell durchführbare Entrastung ermöglicht, da zur Entrastung lediglich ein Werkzeug an dem ersten Rastfuß angesetzt werden muss, mit dem der Rastfinger des ersten Rastfußes aus seiner die Tragschiene verrastenden Stellung herausbiegbar ist. Die weiteren mit dem ersten Rastfuß formschlüssig miteinander verbundenen weiteren Rastfüße werden durch die formschlüssige Verbindung gleichzeitig mitbewegt.

Die Entrastung der Rastfußgruppe von der Tragschiene wird des Weiteren dadurch erleichtert, dass die Rastfinger des mindestens einen zweiten Rastfußes sich in Richtung des zweiten Klemmteils weniger weit erstrecken als der Rastfinger des ersten Rastfußes, an dem das Werkzeug eingreift.

Vorteilhafte Ausführungsvarianten der Erfindung sind Gegenstand der Unteransprüche.

Gemäß einer vorteilhaften Ausführungsvariante der Erfindung ist das erste Klemmteil der Rastfüße rahmenartig geformt, mit wenigstens zwei sich von einem Basissteg erstreckenden Federschenkeln, die an ihren von dem Basissteg entfernten Enden durch einen Verbindungssteg miteinander verbunden sind. Die Federschenkel ermöglichen dabei eine elastische Anbindung der Rastfinger am ersten Klemmteil, so dass durch Ansetzen des Entrastungswerkzeuges an der Werkzeugaufnahme des ersten Klemmteils des ersten Rastfußes die Rastfinger sich mit wenig Kraftaufwand aus der die Tragschiene verrastenden Position in eine die Tragschiene freigebende Position drückbar sind.

Nach einer weiteren Ausführungsvariante der Erfindung weisen die Verbindungsstege auf einer einem ersten Klemmteil eines zweiten Rastfußes zugewandten ersten Fläche wenigstens eine Ausnehmung zur Aufnahme wenigstens eines Steckelementes auf, wobei das wenigstens eine Steckelement aus einer der ersten Fläche gegenüberliegenden zweiten Fläche der Verbindungsstege des ersten Klemmteils des wenigstens einen zweiten Rastfußes vorsteht. Dadurch wird eine einfach herzustellende Steckverbindung zwischen den einzelnen Rastfüßen geschaffen, wobei die Steckelemente quer zu einer Entrastungsrichtung X aus dem wenigstens einen zweiten Rastfuß vorstehen.

Nach einer weiteren bevorzugten Ausführungsvariante der Erfindung weist das erste Klemmteil des ersten Rastfußes wenigstens einen sich zwischen dem Basissteg und dem Verbindungssteg erstreckenden Versteifungssteg auf, um die Verrastung der Rastfüße an der Tragschiene zu verstärken. Die ersten Klemmteile des wenigstens einen zweiten Rastfußes sind bevorzugt ohne solche Versteifungsstege ausgebildet und dadurch leichter in Entrastungsrichtung X verbiegbar, was die Entrastung der Rastfußgruppe zusätzlich erleichtert.

Gemäß einer weiteren vorteilhaften Ausführungsvariante der Erfindung ist die Werkzeugaufnahme als Aufnahmenut zwischen einem an dem Verbindungssteg des ersten Klemmteils des ersten Rastfußes angeordneten Klemmsteg ausgebildet. Als Entrastungswerkzeug kann beispielsweise ein Schraubendreher oder dergleichen eingesetzt werden, der zum Entrasten in die Werkzeugaufnahme eingreift und den Klemmsteg und damit das erste Klemmteil von der Tragschiene weg in Entrastungsrichtung X hebelt.

Für eine gute Zugänglichkeit der Werkzeugaufnahme ist diese besonders bevorzugt als auf einer dem zweiten Klemmteil abgewandten Ende des ersten Klemmteils angeordnet.

Der mit der Werkzeugaufnahme versehene erste Rastfuß ist besonders bevorzugt an einer Außenseite der Rastfußgruppe positioniert.

Die Rastfüße sind gemäß einer weiteren bevorzugten Ausführungsvariante bevorzugt als Spritzgussteile gefertigt und somit kostengünstig herstellbar.

Nachfolgend wird ein bevorzugtes Ausführungsbeispiel der Erfindung anhand der beiliegenden Zeichnungen näher erläutert. Es zeigen:
- Figur 1: eine perspektivische Ansicht einer elektrischen Baugruppe mit einer darin befestigten Ausführungsvariante einer erfindungsgemäßen Rastfußgruppe,
- Figur 2: die perspektivische Darstellung der Baugruppe mit daran befestigter Rastfußgruppe mit an einem ersten Rastfuß angesetztem Entrastungswerkzeug,
- Figur 3: eine perspektivische Ansicht eines Teils der Rastfußgruppe mit an dem ersten Rastfuß angeformter Werkzeugaufnahme,
- Figur 4: eine Seitenansicht auf die Rastfußgruppe im auf eine Tragschiene aufgerasteten Zustand,
- Figuren 5 und 6: perspektivische Ansichten eines Details der Rastfußgruppe zur Darstellung der Verrastung der ersten Klemmteile an der Tragschiene,
- Figur 7: eine perspektivische Darstellung eines Teils des ersten Rastfußes und eines Teils des zweiten Rastfußes im auseinander genommenen Zustand mit Darstellung der Ausnehmungen und eines darin einsteckbaren Steckelementes,
- Figur 8: eine Schnittansicht durch die in Figur 7 im auseinandergenommenen Zustand gezeigten Rastfüße im zusammengesetzten Zustand.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Rastfußgruppe, Rastfuß, Klemmteil, Tragschiene, Rastfinger, Basissteg, Verbindungsteg und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

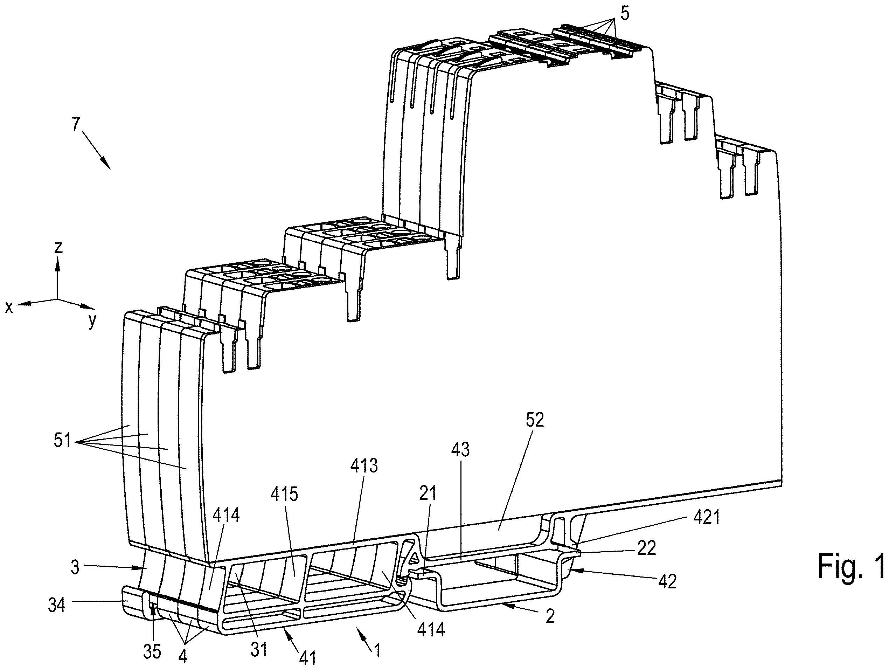

In Figur 1 ist mit dem Bezugszeichen 7 insgesamt eine Baugruppe, insbesondere eine elektrische Baugruppe mit mehreren nebeneinander auf einer Tragschiene 2 angeordneten Gehäusen 5 bezeichnet. Die Gehäuse 5 der Baugruppe 7 bestehen dabei im Wesentlichen aus einem Gehäuseoberteil 51, in dem vorzugsweise elektrische Bauteile und Anschluss- oder Kontaktelemente montiert sind, sowie einem vorzugsweise einstückig an diesem angeformten Gehäuseunterteil mit einem oder mehreren Rastfüßen 3, 4 zum Aufrasten der Gehäuse 5 auf die Tragschiene 2.

Die Tragschiene 2 ist dabei als hutförmige Tragschiene 2 mit zwei bevorzugt in einer Ebene parallel zueinander ausgerichteten freien Außenkanten 21, 22 ausgebildet, die an oder in den Rastfüßen 3, 4 ver- und entrastbar sind.

Mehrere solcher nebeneinander auf der hutförmigen Tragschiene 2 aufrastbare Rastfüße 3, 4 bilden dabei zusammen eine Rastfußgruppe 1, die wenigstens einen ersten Rastfuß 3 und wenigstens einen von dem ersten Rastfuß verschiedenen zweiten Rastfuß 4 aufweist.

Jeder dieser bevorzugt als Spritzgussteile gefertigten Rastfüße 3, 4 weist dabei ein federnd ausgebildetes erstes Klemmteil 31, 41 sowie ein zweites Klemmteil 42 auf, zwischen denen die Tragschiene 2 verrastbar ist.

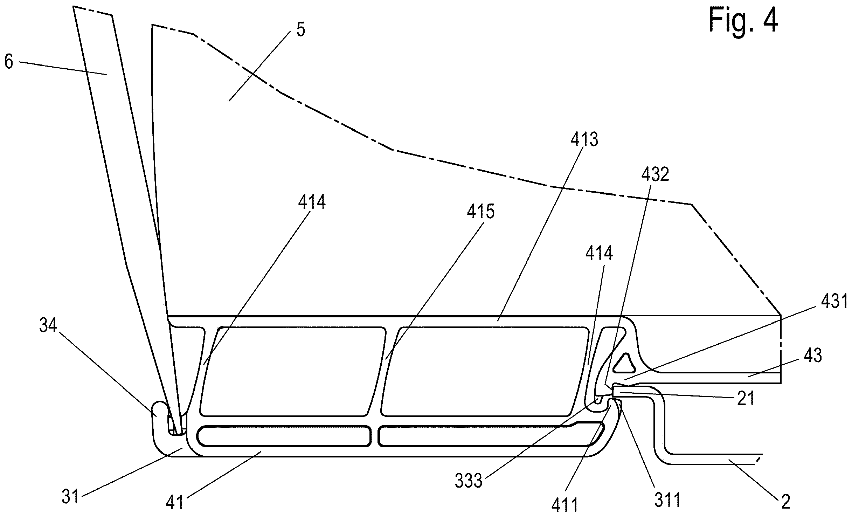

Wie in den Detaildarstellungen der Figuren 4 bis 6 gezeigt, ist an dem ersten Klemmteil 31, 41 jedes der Rastfüße 3, 4 ein die Tragschiene 2 bei auf die Tragschiene 2 aufgerasteten Rastfüßen 3, 4 hintergreifender Rastfinger 311, 411 angeformt, der im verrasteten Zustand der Rastfüße 3, 4 an der Tragschiene 2 eine der freien Außenkanten 21 der Tragschiene gegen eine Rastschiene 33, 43 der Rastfüße 3, 4 drückt.

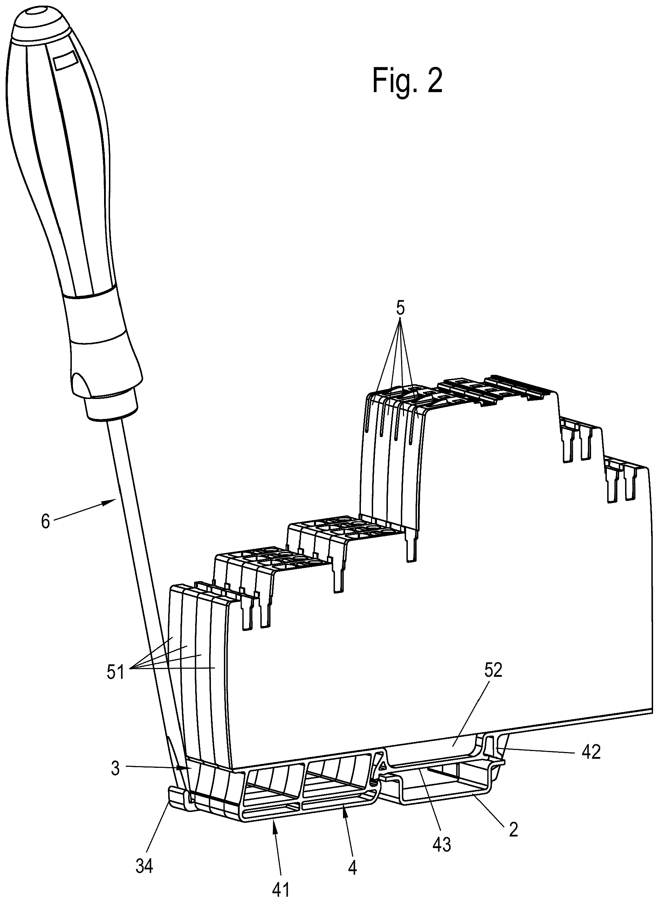

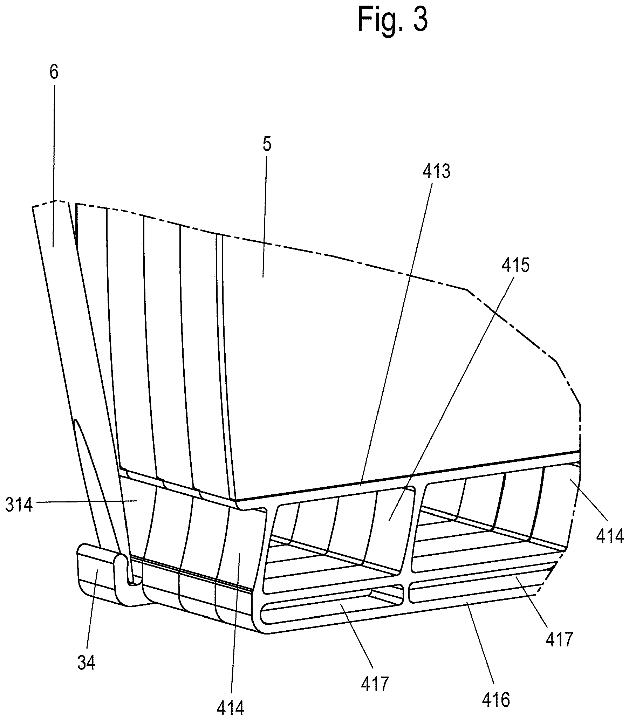

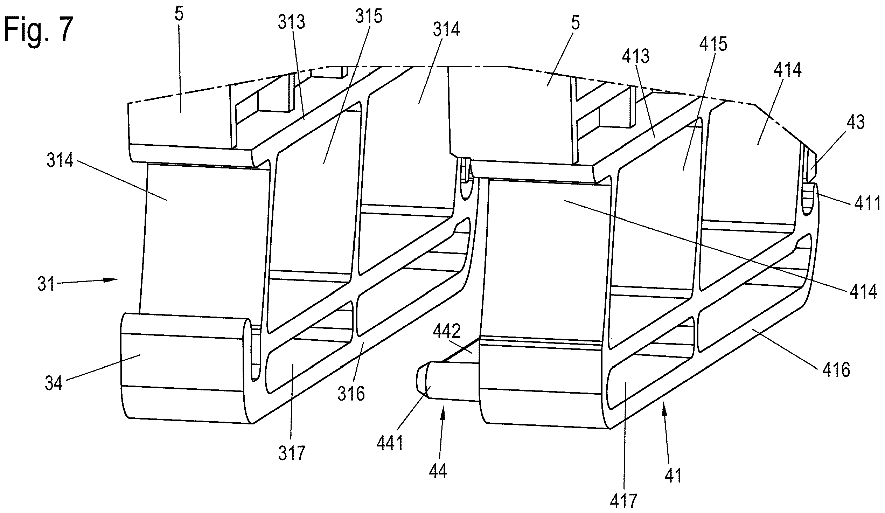

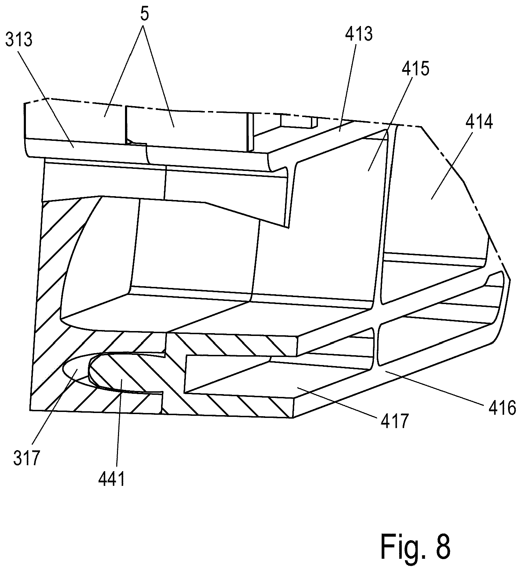

Zumindest die ersten Klemmteile 31, 41 der Rastfüße 3, 4 sind, wie in den Figuren 7 und 8 gezeigt, formschlüssig zu einer Rastfußgruppe verbindbar. Um eine solche Rastfußgruppe 1 in einfacher Weise von der Tragschiene 2 zu lösen, weist, wie gezeigt in den Figuren 2 bis 4, ausschließlich das erste Klemmteil 31 des ersten Rastfußes 3 eine Werkzeugaufnahme 35 zum Ansetzen eines Entrastungswerkzeuges 6, beispielsweise in Gestalt eines Schraubendrehers, auf, mit dem die gesamte aus mehreren Rastfüßen zusammengesetzte Rastfußgruppe 1 bei Betätigen des Entrastungswerkzeuges 6 von der Tragschiene 2 entrastbar ist.

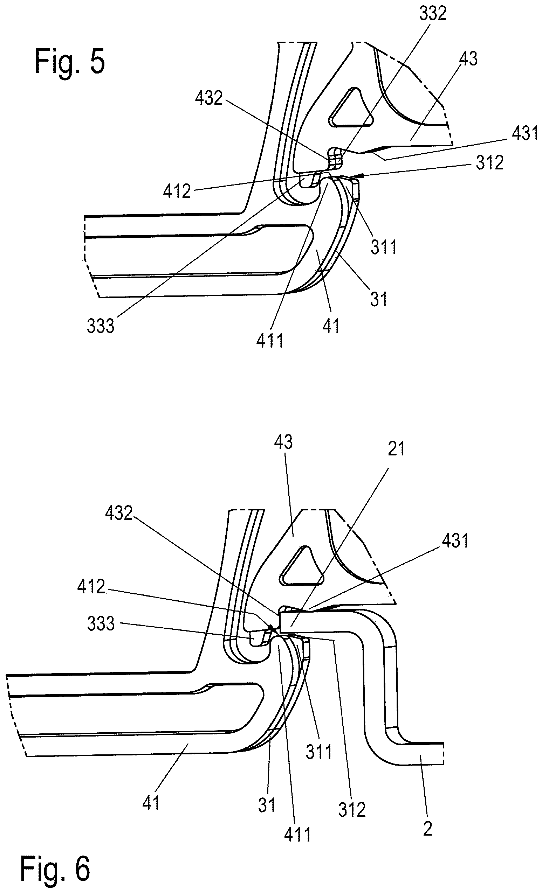

Zur weiteren Erleichterung eines solchen Entrastvorganges weist der Rastfinger 311 des ersten Klemmteils 31 des ersten Rastfußes 3, wie in den Figuren 5 und 6 gezeigt, eine sich in Richtung des zweiten Klemmteils 32 erstreckende Auflagefläche 312 zur Auflage der Tragschiene 2 im verrasteten Zustand auf, die sich etwas weiter als eine Auflagefläche 412 zur Auflage der Tragschiene 2 im verrasteten Zustand des Rastfingers 411 des ersten Klemmteils 41 des wenigstens einen zweiten Rastfußes 4 erstreckt.

Das erste Klemmteil 31, 41 der Rastfüße 3, 4 ist, wie beispielsweise in den Figuren 1 bis 4 gut erkennbar, bevorzugt rahmenartig geformt.

Dabei erstrecken sich von einem Basissteg 313, 413, der dem Übergang zum oberen Gehäuseteil 51 bildet, mehrere Federschenkel 314, 414 von dem oberen Gehäuseteil 51 weg und sind an ihren von dem Basissteg 313, 413 entfernten Enden durch einen Verbindungssteg 316, 416 mit einander verbunden.

Die Federschenkel 314, 414 sind dabei gegenüber dem Basissteg 313, 413 und dem Verbindungssteg 316, 416 bevorzugt nicht rechtwinklig, sondern von dem Basissteg 313, 413 aus in Entrastungsbewegungsrichtung x des ersten Klemmteils 31, 41 unter spitzem Winkel schräg verlaufend angeordnet, so dass die Rastfinger 311, 411 bei einer durch das Entrastungswerkzeug 6 ausgelösten Entrastungsbewegung nicht parallel zum Basissteg 313, 413, sondern auch geringfügig auf die Basisstege 313, 413 zu bewegt werden.

Der erste Rastfuß 3 ist dabei bevorzugt an einer Außenseite der Rastfußgruppe 1 positioniert. Denkbar ist aber auch, den mit der Werkzeugaufnahme 35 versehenen ersten Rastfuß 3 mittig in der Rastfußgruppe 1 anzuordnen. Als mittig ist dabei jede Position zwischen an den Außenseiten der Rastfußgruppe angeordneten zweiten Rastfüßen 4 ohne Werkzeugaufnahme 35 zu verstehen.

Zur weiteren Versteifung des rahmenartig geformten Klemmteils 31, 41 weist das erste Klemmteil 31, 41 der Rastfüße 3, 4 wenigstens einen sich zwischen dem Basissteg 313, 413 und dem Verbindungssteg 316, 416 erstreckenden Versteifungssteg auf.

Wie in den Figuren 7 und 8 gezeigt, weisen die Verbindungsstege 316, 416 der ersten Klemmteile 31, 41 auf einer einem ersten Klemmteil 31 eines zweiten Rastfußes 4 zugewandten ersten Fläche wenigstens eine Ausnehmung 317, 417 zur Aufnahme wenigstens eines Steckelementes 44 auf.

Dieses Steckelement 44 steht dabei aus der Ausnehmung 317, 417 des benachbarten Rastfußes 3, 4 hervor. Das Steckelement 44 erstreckt sich dabei vorzugsweise über die gesamte Breite der Ausnehmung 317, 417.

Die Eckbereiche der Ausnehmungen 317, 417 sind bevorzugt gerundet geformt. Entsprechend ist das Steckelement 44 an seinen freien Seitenrändern mit, bevorzugt zylindrischen, Stopfen 441 versehen, zwischen denen sich das Steckelement 44 als plattenförmiges Element 442 erstreckt.

Wichtig ist hier der formschlüssige Eingriff des Steckelementes 44 in die jeweilige Ausnehmung 317, 417, um eine hinreichende Versteifung in Verrastungsbeziehungsweise Entrastungsrichtung x der Rastfußgruppe 1 zu bewirken.

Die Werkzeugaufnahme 35 ist, wie beispielsweise in Figur 7 gezeigt, bevorzugt als Aufnahmenut ausgebildet, die durch einen an dem Verbindungssteg 316 des ersten Klemmteils 31 des ersten Rastfußes 3 angeordneten Klemmsteg 34 und einem diesem benachbarten Federschenkel 314 gebildet wird.

Zur einfachen Betätigung ist die Werkzeugaufnahme 35 auf einem dem zweiten Klemmteil 32 abgewandten Ende des ersten Klemmteils 31 vorgesehen.

In diese Aufnahmenut wird zum Entrasten der Rastfußgruppe 1 der Kopf des Werkzeugs 6, beispielsweise der Schraubkopf des Schraubendrehers eingeführt und durch Stemmen eines Halses des Werkzeugs gegen eine stirnseitige Wand des Gehäuseoberteils 51 der Schraubkopf und damit das erste Klemmteil 31, 41 der Rastfüße 3, 4 in Entrastungsrichtung x der Rastfußgruppe 1 gedrückt, wobei die Rastfinger 311, 411 unter den Rastschienen 33, 43 seitlich in Entrastungsrichtung x der Rastfußgruppe 1 weg bewegt werden und die mit den ersten Klemmteilen 31, 41 im verrasteten Zustand in Berührung stehende erste freie Außenkante 21 der Tragschiene 2 freigeben.

Zur Verklemmung der Tragschiene 2 ist zwischen den Klemmteilen 31, 32, 41, 42 die Rastschiene 33, 43 angeformt. An dieser Rastschiene 33, 43 sind dabei zur Erzeugung eines Gegendruckes gegenüber den Rastfingern 311, 411, Anlageflächen 331, 431 vorgesehen, so dass das mit dem ersten Klemmteil 31, 41 verrastbare erste freie Ende 21 der Tragschiene 2 zwischen den Rastfingern 311, 411 der ersten Klemmteile 31, 41 und den Anlageflächen 331, 431 der Rastschiene 33, 43 verklemmbar ist.

Das zweite freie Ende 22 der Tragschiene 2 ist dabei in einer Nut eines Steges 42 des zweiten Klemmteils 32, 42 aufgenommen.

### Bezugszeichenliste

- 1: Rastfußgruppe

- 2: Tragschiene
- 21: freies Ende
- 22: freies Ende

- 3: Rastfuß
- 31: erstes Klemmteil
- 311: Rastfinger
- 312: Auflagefläche
- 313: Basissteg
- 314: Federschenkel
- 316: Verbindungssteg
- 317: Ausnehmung
- 33: Rastschiene
- 331: Anlagefläche
- 34: Klemmsteg
- 35: Werkzeugaufnahme

- 4: Rastfuß
- 41: erstes Klemmteil
- 411: Rastfinger
- 412: Auflagefläche
- 413: Basissteg
- 414: Federschenkel
- 416: Verbindungssteg
- 417: Ausnehmung
- 42: zweites Klemmteil
- 43: Rastschiene
- 431: Anlagefläche
- 44: Steckelement
- 441: Stopfen
- 442: plattenförmiges Element

- 5: Gehäuse
- 51: Gehäuseoberteil
- 52: Gehäuseunterteil

- 6: Entrastungswerkzeug
- 7: Baugruppe

- X: Ver- oder Entrastungsrichtung

## Patentansprüche

1. Rastfußgruppe (1) für eine Baugruppe, insbesondere eine elektrische Baugruppe (7), mit mehreren nebeneinander angeordneten, auf eine Tragschiene (2), insbesondere eine hutförmige Tragschiene, aufrastbaren Rastfüßen (3, 4), aufweisend
- einen ersten Rastfuß (3),
- wenigstens einen zweiten Rastfuß (4),
- wobei jeder der Rastfüße (3, 4) ein federnd ausgebildetes erstes Klemmteil (31, 41) und ein zweites Klemmteil (32, 42) aufweist, zwischen denen die Tragschiene (2) verrastbar ist,
- wobei an dem ersten Klemmteil (31, 41) jedes der Rastfüße (3, 4) ein die Tragschiene (2) bei auf die Tragschiene (2) aufgerasteten Rastfüßen (3, 4) hintergreifender Rastfinger (311, 411) angeformt ist,
**dadurch gekennzeichnet, dass**
- die ersten Klemmteile (31, 41) der Rastfüße (3, 4) formschlüssig miteinander verbindbar sind,
- wobei ausschließlich das erste Klemmteil (31) des ersten Rastfußes (3) eine Werkzeugaufnahme (35) zum Ansetzen eines Entrastungswerkzeuges (6) aufweist,
- wobei der Rastfinger (311) des ersten Klemmteils (31) des ersten Rastfußes (3) eine sich in Richtung des zweiten Klemmteils (32) weiter erstreckende Auflagefläche (312) zur Auflage der Tragschiene (2) im verrasteten Zustand aufweist als eine Auflagefläche (412) zur Auflage der Tragschiene (2) im verrasteten Zustand des Rastfingers (411) des ersten Klemmteils (41) des wenigstens einen zweiten Rastfußes (4).

2. Rastfußgruppe (1) nach Anspruch 1, **dadurch gekennzeichnet, dass** das erste Klemmteil (31, 41) der Rastfüße (3, 4) rahmenartig geformt ist, mit wenigstens zwei sich von einem Basissteg (313, 413) erstreckenden Federschenkeln (314, 414), die an ihren von dem Basissteg (313, 413) entfernten Enden durch einen Verbindungssteg (316, 416) miteinander verbunden sind.

3. Rastfußgruppe (1) nach Anspruch 2, **dadurch gekennzeichnet, dass** die Verbindungsstege (316, 416) auf einer einem ersten Klemmteil (41) eines zweiten Rastfußes (4) zugewandten ersten Fläche wenigstens eine Ausnehmung (317, 417) zur Aufnahme wenigstens eines Steckelementes (44) aufweisen, wobei das wenigstens eine Steckelement (44) aus einer der Ausnehmung (317, 417) abgewandten Seitenfläche des ersten Klemmteils (41) des wenigstens einen zweiten Rastfußes (4) vorsteht.

4. Rastfußgruppe (1) nach Anspruch 3, **dadurch gekennzeichnet, dass** die Breite des Steckelementes (44) in Verrastungs- bzw. Entrastungsrichtung (x) der Breite der Ausnehmung (317, 417) entspricht.

5. Rastfußgruppe (1) nach Anspruch 4, **dadurch gekennzeichnet, dass** in Steckrichtung (y) verlaufende Seiten des Steckelementes (44) im eingesteckten Zustand formschlüssig in Eckbereiche der Ausnehmung (317, 417) eingreifen.

6. Rastfußgruppe (1) nach Anspruch 5, **dadurch gekennzeichnet, dass** an in Steckrichtung (y) verlaufenden Seiten des Steckelementes (44) Stopfen (441) angeformt sind, die durch einen plattenförmigen Verbindungssteg (442) miteinander verbunden sind.

7. Rastfußgruppe (1) nach einem der vorstehenden Ansprüche, **dadurch gekennzeichnet, dass** das erste Klemmteil (31) des ersten Rastfußes (3) wenigstens einen sich zwischen dem Basissteg (313) und dem Verbindungssteg (316) erstreckenden Versteifungssteg (415) aufweist.

8. Rastfußgruppe (1) nach einem der vorherigen Ansprüche, **dadurch gekennzeichnet, dass** die Werkzeugaufnahme (35) als Aufnahmenut zwischen einem an dem Verbindungssteg (316) des ersten Klemmteils (31) des ersten Rastfußes (3) angeordneten Klemmsteg (34) ausgebildet ist.

9. Rastfußgruppe (1) nach Anspruch 8, **dadurch gekennzeichnet, dass** die Werkzeugaufnahme (35) auf einer dem zweiten Klemmteil (32) abgewandten Ende des ersten Klemmteils (31) angeordnet ist.

10. Rastfußgruppe (1) nach einem der vorherigen Ansprüche, **dadurch gekennzeichnet, dass** die Klemmteile (31, 32, 41, 42) an sich gegenüberliegenden Seiten einer Rastschiene (33, 43) angeordnet sind.

11. Rastfußgruppe (1) nach einem der vorherigen Ansprüche, **dadurch gekennzeichnet, dass** der erste Rastfuß (3, 4) an einer Außenseite der Rastfußgruppe (1) positioniert ist.

12. Rastfußgruppe (1) nach einem der vorherigen Ansprüche 1 bis 10, **dadurch gekennzeichnet, dass** der erste Rastfuß (3, 4) mittig in der Rastfußgruppe (1) positioniert ist.

13. Rastfußgruppe (1) nach einem der vorherigen Ansprüche, **dadurch gekennzeichnet, dass** die Rastfüße (3, 4) als Spritzguss- Teile gefertigt sind.

14. Baugruppe (7), insbesondere elektrische Baugruppe, **gekennzeichnet durch** eine Rastfußgruppe (1) nach einem der vorherigen Ansprüche.

## Claims

1. A latching foot group (1) for an assembly, in particular an electrical assembly (7), comprising a plurality of latching feet (3, 4) which are arranged adjacent to one another and can be latched onto a support rail (2), in particular a hat-shaped support rail, comprising
- a first latching foot (3),
- at least one second latching foot (4),
- wherein each of the latching feet (3, 4) has a resiliently configured first clamping part (31, 41) and a second clamping part (32, 42), between which the support rail (2) can be latched,
- wherein a latching finger (311, 411) engaging behind the support rail (2) when the latching legs (3, 4) are latched onto the support rail (2) are integrally formed on the first clamping part (31, 41) of each of the latching feet (3, 4),
**characterized in that**
- the first clamping parts (31, 41) of the latching feet (3, 4) can be connected to one another in an interlocking manner,
- wherein only the first clamping part (31) of the first latching foot (3) has a tool receiving area (35) for applying an unlatching tool (6),
- wherein the latching finger (311) of the first clamping part (31) of the first latching foot (3) has a support surface (312) for supporting the support rail (2) in the latched state, said support surface extending farther in the direction of the second clamping part (32) than a support surface (412) for supporting the support rail (2) in the latched state of the latching finger (411) of the first clamping part (41) of the at least one second latching foot (4).

2. A latching foot group (1) according to claim 1, **characterized in that** the first clamping part (31, 41) of the latching feet (3, 4) are formed in a frame-shaped manner, having at least two spring legs (314, 414) which extend from a base web (313, 413) and which are connected to one another at their ends remote from the base web (313, 413) by a connecting web (316, 416).

3. A latching foot group (1) according to claim 2, **characterized in that** the connecting webs (316, 416) comprise at least one recess (317, 417) for accommodating at least one plug element (44) on a first surface facing a first clamping part (41) of a second clamping foot (4), wherein the at least one plug element (44) protrudes from a side surface of the first clamping part (41) of the at least one second latching foot (4), said side surface facing away from the recess (317, 417).

4. A latching foot group (1) according to claim 3, **characterized in that** the width of the plug element (44) in the latching or unlatching direction (x) corresponds to the width of the recess (317, 417).

5. A latching foot group (1) according to claim 4, **characterized in that** sides of the plug element (44) extending in the plug-in direction (y) engage in the inserted state in an interlocking manner into corner regions of the recess (317, 417).

6. A latching foot group (1) according to claim 5, **characterized in that** plugs (441) are integrally formed on the sides of the plug element (441) which extend in the plug-in direction (y) and are connected to one another by a plate-shaped connecting web (442).

7. A latching foot group (1) according to one of the preceding claims, **characterized in that** the first clamping part (31) of the first latching foot (3) has at least one stiffening web (415) extending between the base web (313) and the connecting web (316).

8. A latching foot group (1) according to one of the preceding claims, **characterized in that** the tool receiving area (35) is designed as a receiving groove between a clamping web (34) arranged on the connecting web (316) of the first clamping part (31) of the first latching foot (3).

9. A latching foot group (1) according to claim 8, **characterized in that** the tool receiving area (35) is arranged on an end of the first clamping part (31) remote from the second clamping part (32).

10. A latching foot group (1) according to one of the preceding claims, **characterized in that** the clamping parts (31, 32, 41, 42) are arranged on mutually opposite sides of a latching rail (33, 43).

11. A latching foot group (1) according to one of the preceding claims, **characterized in that** the first latching foot (3, 4) is positioned on an outer side of the latching foot group (1).

12. A latching foot group (1) according to one of the preceding claims 1 to 10, **characterized in that** the first latching foot (3, 4) is positioned centrally in the latching foot group (1).

13. A latching foot group (1) according to one of the preceding claims, **characterized in that** the latching feet (3, 4) are produced as injection-moulded parts.

14. An assembly (7), in particular an electrical assembly, **characterized by** a latching foot group (1) according to one of the preceding claims.

## Revendications

1. Groupe de pieds d'encliquetage (1) pour un module, en particulier un module électrique (7), comportant plusieurs pieds d'encliquetage (3, 4) disposés côte à côte et pouvant être fixés par encliquetage sur un rail de support (2), en particulier un rail de support en forme de chapeau, présentant
- un premier pied d'encliquetage (3),
- au moins un deuxième pied d'encliquetage (4),
- chacun des pieds d'encliquetage (3, 4) présentant une première partie de serrage (31, 41) réalisée de façon à faire ressort et une deuxième partie de serrage (32, 42), entre lesquelles le rail de support (2) peut être encliqueté,
- un doigt d'encliquetage (311, 411) venant en prise derrière le rail de support (2) lorsque les pieds d'encliquetage (3, 4) sont encliquetés sur le rail de support (2) étant formé sur la première partie de serrage (31, 41) de chacun des pieds d'encliquetage (3, 4),
**caractérisé en ce que**
- les premières pièces de serrage (31, 41) des pieds d'encliquetage (3, 4) peuvent être reliées entre elles par complémentarité de forme,
- seule la première partie de serrage (31) du premier pied d'encliquetage (3) présentant un logement d'outil (35) pour placer un outil de désencliquetage (6),
- le doigt d'encliquetage (311) de la première partie de serrage (31) du premier pied d'encliquetage (3) présentant une surface d'appui (312) destinée à l'appui du rail de support (2) à l'état encliqueté qui s'étend plus loin dans la direction de la deuxième partie de serrage (32) qu'une surface d'appui (412) destinée à l'appui du rail de support (2) à l'état encliqueté du doigt d'encliquetage (411) de la première partie de serrage (41) dudit au moins un deuxième pied d'encliquetage (4).

2. Groupe de pieds d'encliquetage (1) selon la revendication 1, **caractérisé en ce que** la première partie de serrage (31, 41) des pieds d'encliquetage (3, 4) est réalisée en forme de cadre, avec au moins deux branches élastiques (314, 414) qui s'étendent à partir d'une barrette de base (313, 413) et qui sont reliées entre elles par une barrette de liaison (316, 416) à leurs extrémités éloignées de la barrette de base (313, 413).

3. Groupe de pieds d'encliquetage (1) selon la revendication 2, **caractérisé en ce que** les barrettes de liaison (316, 416) présentent, sur une première surface tournée vers une première partie de serrage (41) d'un deuxième pied d'encliquetage (4), au moins un évidement (317, 417) destiné à recevoir au moins un élément enfichable (44), ledit au moins un élément enfichable (44) faisant saillie d'une surface latérale, opposée à l'évidement (317, 417), de la première partie de serrage (41) dudit au moins un deuxième pied d'encliquetage (4).

4. Groupe de pieds d'encliquetage (1) selon la revendication 3, **caractérisé en ce que** la largeur de l'élément enfichable (44) dans la direction d'encliquetage ou de désencliquetage (x) correspond à la largeur de l'évidement (317, 417).

5. Groupe de pieds d'encliquetage (1) selon la revendication 4, **caractérisé en ce que** des côtés de l'élément enfichable (44) s'étendant dans la direction d'enfichage (y) s'engagent, à l'état enfiché, par complémentarité de forme dans des zones de coin de l'évidement (317, 417).

6. Groupe de pieds d'encliquetage (1) selon la revendication 5, **caractérisé en ce que** des bouchons (441) reliés entre eux par une barrette de liaison (442) en forme de plaque sont formés sur des côtés de l'élément enfichable (44) qui s'étendant dans la direction d'enfichage (y).

7. Groupe de pieds d'encliquetage (1) selon l'une des revendications précédentes, **caractérisé en ce que** la première partie de serrage (31) du premier pied d'encliquetage (3) présente au moins une barrette de renforcement (415) qui s'étend entre la barrette de base (313) et la barrette de liaison (316).

8. Groupe de pieds d'encliquetage (1) selon l'une des revendications précédentes, **caractérisé en ce que** le logement d'outil (35) est réalisé sous la forme d'une rainure de réception entre une barrette de serrage (34) disposée sur la barrette de liaison (316) de la première partie de serrage (31) du premier pied d'encliquetage (3).

9. Groupe de pieds d'encliquetage (1) selon la revendication 8, **caractérisé en ce que** le logement d'outil (35) est disposé à une extrémité de la première partie de serrage (31) opposée à la deuxième partie de serrage (32).

10. Groupe de pieds d'encliquetage (1) selon l'une des revendications précédentes, **caractérisé en ce que** les pièces de serrage (31, 32, 41, 42) sont disposées sur des côtés opposés d'un rail d'encliquetage (33, 43).

11. Groupe de pieds d'encliquetage (1) selon l'une des revendications précédentes, **caractérisé en ce que** le premier pied d'encliquetage (3, 4) est positionné sur un côté extérieur du groupe de pieds d'encliquetage (1).

12. Groupe de pieds d'encliquetage (1) selon l'une des revendications 1 à 10 précédentes, **caractérisé en ce que** le premier pied d'encliquetage (3, 4) est positionné de manière centrale dans le groupe de pieds d'encliquetage (1).

13. Groupe de pieds d'encliquetage (1) selon l'une des revendications précédentes, **caractérisé en ce que** les pieds d'encliquetage (3, 4) sont réalisés sous la forme de pièces moulées par injection.

14. Module (7), en particulier module électrique, **caractérisé par** un groupe de pieds d'encliquetage (1) selon l'une des revendications précédentes.
